# EUROPEAN PATENT SPECIFICATION

(11) **EP 1 407 574 B1**
(45) Date of publication and mention of the grant of the patent: **23.01.2008**
(21) Application number: 02738488.2
(22) Date of filing: 20.06.2002
(51) Int. Cl.: H04L 9/12, H04L 9/18

(54) **STREAMCIPHER SYNCHRONISATION INFORMATION WHICH IS REDUNDANT IN NEXT PACKET OF ENCRYPTED FRAME**
SYNCHRONISATIONSINFORMATION WELCHE IM NÄCHSTEN PAKET EINES VERSCHLÜSSELTEN RAHMENS EINER STROMVERSCHLÜSSELUNG REDUNDANT EINGEFÜGT IST
INFORMATIONS DE SYNCHRONISATION DE CHIFFRAGE PAR FLOT QUI SONT REDONDANTES DANS LE PAQUET SUIVANT D'UNE TRAME CHIFFREE

(30) Priority: 06.07.2001 EP 01202608
(43) Date of publication of application: 14.04.2004
(73) Proprietor: Koninklijke Philips Electronics N.V., 5621 BA Eindhoven (NL)
(72) Inventor: VAN RIJNSOEVER, Bartholomeus, J., NL-5656 AA Eindhoven (NL); VAN PUL, Cornelis, L., M., NL-5656 AA Eindhoven (NL)
(74) Representative: Damen, Daniel Martijn
(86) International application number: PCT/IB2002/002393
(87) International publication number: WO 2003/005635

(56) References cited:
- WO-A-01/24436
- US-A- 5 060 266
- US-A- 5 488 659
- US-A- 5 987 137

## Description

### BACKGROUND OF THE INVENTION

The invention relates to a method as recited in the preamble of Claim 1. Although the present invention would in principle be applicable to a variety of transmission media, a particular application that the inventors had in view is Internet. Now, the quality of the information content communicated on Internet is rapidly improving due to advances in bandwidth saving coding technology, and also due to the increasing of the bandwidth itself. Content providers intend to sell such high value content to users, and in consequence the need is arising to provide a scheme for so-called Conditional Access or Digital Rights Management. Any such system will encrypt a content item or part thereof and subsequently manage the decryption keys in such manner that only authorized end-users are able to decrypt.

Now, such user information will generally be structured into frames. Especially in case of video content, such frames will in general be large, which necessitates to transmit the payload of such frame through a plurality of network packets in sequence. A particular manner of replaying the content is where the user will play as soon as it arrives, without providing for downloading the whole data file before playing. This approach will provide faster access at the receiver end, but will in general not allow for retransmission of a particular packet. If for some reason data is lost, the content player has to self-reliantly execute some repair operation. By itself, various such repair mechanisms have been known, but the approach remains sub-optimum.

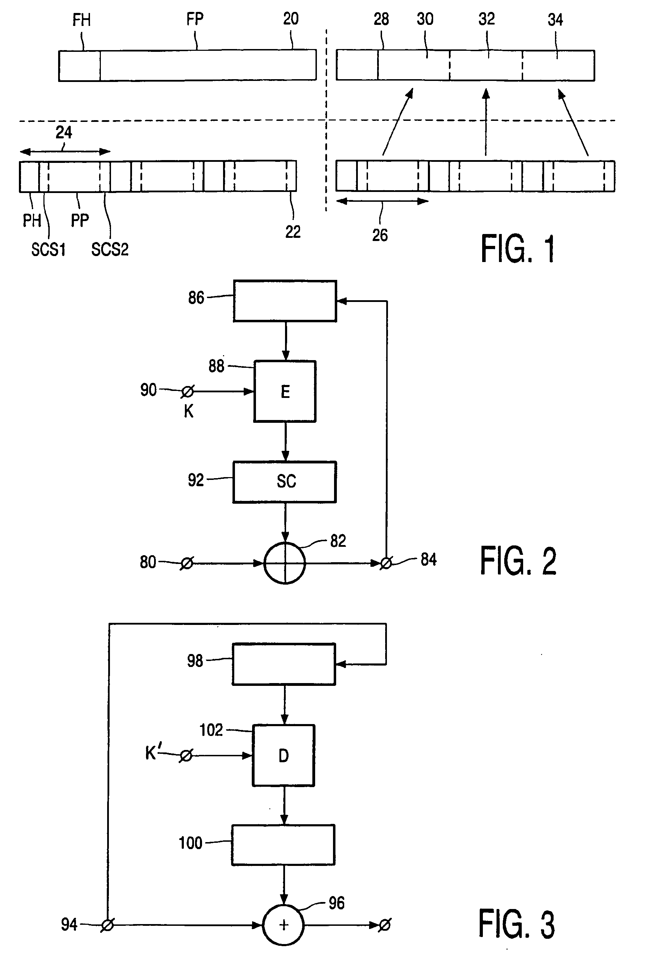

Now, the encrypting is best effected at the level of the frame. By itself, the assigning of user or payload information to a frame has been done according to a variety of standards, such as MPEG. Encryption at the frame level allows for persistent or end-to-end encryption that applies both to transmitted and to stored content. Now, the accepted best manner of encrypting multi-media information is by using a stream cipher, and especially, a self-synchronizing stream cipher. A stream cipher, such as disclosed in US patent US 5 987 137, will then generate a cipher text through then generate a cipher text through applying an EXOR operation to a combination of the plain text and the key stream. In a self-synchronizing stream cipher the ciphered stream is subsequently retrocoupled, cf. Figure 2, and by itself represents an internal state of the encoder, and allows for synchronizing the decoder subsequently. Using such stream cipher, the sequence of transmission packets may be encrypted in a straightforward manner. In fact, self-synchronizing stream ciphering generates the key stream on the basis of the cipher text and a secret key. An initialization vector is required to start the generation process of the key stream.

Now, although the stream-ciphering is in principle self-synchronizing, the loss of a single transmission packet may entail the loss of one or more following transmission packets as well, or even the remainder of the associated frame, or in certain standards, even the whole of the associated frame. In fact, at the receiver side, the loss of a single transmission packet could easily imply the loss of the next transmission packet as well, through loss of synchronization of the ciphering stream. This may cause a serious degradation of the content quality, because in many cases a content decoder should have been able to decode all or nearly all of the information outside the faulty transmission packet.

### SUMMARY TO THE INVENTION

In consequence, amongst other things, it is an object of the present invention to allow improved reception reliability of the sequence of individual decryption synchronizing informations, even under failure of certain particular transmission packets, through enabling resynchronization of the decoding procedure with respect to the synchronizing ciphering stream as quickly as possible. On another level, the invention provides some of the advantages of the encrypting on the level of a frame, such as an easier way to manage the storing of information at the receiving side.

Now therefore, according to one of its aspects the invention is characterized according to the characterizing part of Claim 1.

The invention also relates to a method for decrypting such encrypted information, to a device for encrypting or for decrypting such information, to a system for encrypting and/or decrypting such information, to a tangible carrier for storing such encrypted information for use with such methods, and to a signal carrying encrypted payload information arranged for being used with such methods. Further advantageous aspects of the invention are recited in dependent Claims.

### BRIEF DESCRIPTION OF THE DRAWING

These and further aspects and advantages of the invention will be discussed more in detail hereinafter with reference to the disclosure of preferred embodiments, and in particular with reference to the appended Figures that show:
Figure 1, an encrypting format for use with the invention;
Figure 2, an encrypting device for use with such format;
Figure 3, a decrypting device for use with such format;
Figure 4, an overall encrypting/decrypting system for use with such format.

### DETAILED DESCRIPTION OF PREFERRED EMBODIMENTS

Figure 1 illustrates an encrypting format for use with the invention. The top row relates to the user information such as audio or video, and which consists of a single frame 20, with frame header FH and frame payload FP. A sequence of such frames need not have uniform amounts of payload data, but the size thereof may depend on the applicable degree of information compaction. Further to the frame structure as shown, the format may have a sub-frame format associated to the application which has not been shown further, but which may constitute a further dividing of the frame over various subframes, without such division being noticeable in the further encryption/decryption procedure considered herinafter. These subframes may be related to a further information structure associated to the application to which the transmitted payload relates.

On the second row, frame 20 is mapped on a sequence of three transmission packets 22, which number is in principle arbitrary. The format of each packet is governed by an applicable transmission standard, and generally, all packets have a uniform size as indicated by arrow 24. Within the packet indicated by arrow 24, there is packet header PH and packet payload PP. Furthermore, synchronization information SCS2 is governed by the streamciphering state of the actual packet at the end thereof for allowing the next successive packet to instantaneously synchronize to the stream ciphering procedure. In fact, SCS2 forms part of the encrypted data. Finally, packet 24 contains synchronization information SCS1 which is governed by the streamciphering state of the *preceding* packet at the end of the latter for allowing the next successive packet, i.e. packet 24 itself to instantaneously synchronize to the streamciphering procedure. For the packet that would start the synchronization, SCS1 is either absent, or may represent an initialization vector of the frame encryption. For subsequent packets, SCS1 is a repetition of the preceding SCS2. The packet formats of the other packets are corresponding. The synchronizing by the streamciphering synchronization informations may or may not cross the border between contiguous transmission frames. For brevity, further detailing of the various formats has been ignored.

At the lower right-hand side of the Figure, the transmission packets of the frame in question have been drawn again. If all goes right, these will be exact copies of the transmission packets at left. Therefore, transmission packet 26 will be mapped by decryption on payload part 30 of received frame 28, and correspondingly for payload parts 32 and 34. The problems occurring when a transmission packet will partly or wholly go astray, will be discussed with reference to Figures 2, 3 hereinafter.

Now, Figure 2 illustrates a streamcipher-based encrypting device for use with the format according to the present invention. For brevity, only the processing of payload FP will be discussed. The payload information enters on input terminal 80, for example bit-serially, but this is not an express limitation. Item 82 implements an EXCLUSIVE-OR operation for encryption. The encrypted information becomes available on output terminal 84. For brevity, all special operations with respect to header PH of Figure 1 have been ignored. Furthermore, the encrypted information is retrocoupled into local encrypting state information register 86 and subsequently encrypted with the encryption key K received on input terminal 90 from some provider mechanism that has been known in the art, and subsequently stored in register 92 for EXCLUSIVE-ORING with the input information received on input terminal 80. At the beginning, register 86 is at zero or another feasible information, so the encrypting is with the frame encryption key K. The information from Register 92 has been termed the key stream.

The EXCLUSIVE-ORING in element 82 may be executed bit-by-bit, or rather be bit-parallel such as for 128 bits or another appropriate number. The register width of register 92 would then be accordingly higher, and the clock frequency applied to the intermediate storage registers 86 and 92 would be accordingly lower. At the end of encrypting of a particular transmission packet, register 86 contains the internal state of the streamcipher-based encoding. For introducing a synchronization information into the encoding, this information is transmitted in a redundant manner in the next-following transmission packet. This means that at the receiving side this information will be available as a seed information for initializing the decrypting of the next transmission packet, even if the first transmission packet has not been received in a sufficiently correct manner.

Figure 3 illustrates a decrypting device being arranged for use with the above disclosed format, and in fact rather closely resembles Figure 2. Herein, the encrypted payload is entered on input terminal 94, which branches to register 98 for storing the streamcipher-based synchronization information SCS1 provided at the beginning of the transmission packet in question. Furthermore, the information to be decrypted is forwarded to EXCLUSIVE-OR facility 96. Facility D 102 receives the frame decoding key K', that is the inverse of encrypting key K in Figure 2. Furthermore, facility 102 receives the information from register 98, that is a correctly received version of the streamcipher-based synchronization information for on the basis thereof executing the decryption. The combination of the latter two pieces of information is forwarded to register 100. Finally, through EXCLUSIVE-ORING of the output from register 100 and the input received from terminal 94 the correct data is reconstructed again.

In this manner, there is no forced dependency between the decryption of two contiguous transmission packets, in that the information of the internal state on the encryption is always available at the receiving side, regardless of the reception quality of the preceding packet. There is no further necessity for bookkeeping of the encryption state at the receiver: it will always be available immediately at the beginning of a new transmission packet. Note furthermore, that generally, the streamcipher mechanism is self-synchronizing, which however will take a certain amount of time, and which in case of a lost transmission packet may lead to additionally lost information outside the lost packet.

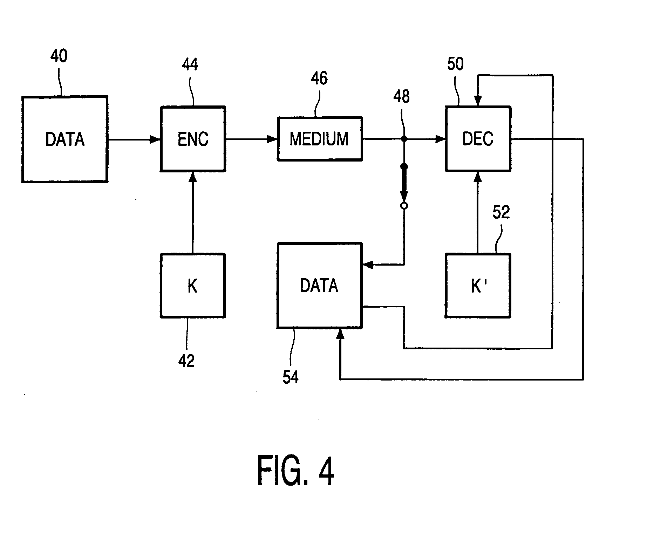

Figure 4 illustrates an overall encrypting/decrypting system being arranged for use with the format according to the present invention. Block 40 represents a data generating facility, such as a memory, camera, or other. Block 42 represents the facility for generating or presenting one or more frame encryption keys. The encryption proper occurs in facility 44 along the lines presented hereabove with respect to Figure 2. The encrypted data are transported over medium 46, that may be CD-ROM, DVD, Internet, broadcast, or other. At the receiving side, the position of switch 48 controls either forwarding to decoder facility 50, or to data storage facility 54. The decoder facility 50 operates according to the lines discussed supra with respect to Figure 3. After decrypting, through further providing with appropriate frame decoding key or keys from key presentation facility 52, the decrypted payload is stored in data storage facility 54. If decryption is effected only after a certain delay, the data storage facility will present its appropriate content or part thereof to decoding facility 50. For brevity, communication with a further application or user facility has not been discussed further.

## Claims

1. A method for transmitting frame-based information through a transmission medium, whilst assigning payload information (FP) of a particular frame (20) to one or more transmission packets (22) and encrypting the payload information of such frame through a frame encryption key (K), and providing each transmission packet (24) with individual streamcipher-based synchronization information (SCS2) for in combination with the frame decryption key (K') enabling decrypting of an associated encrypted transmission packet (26),
said method being **characterized by** transmitting said streamcipher-based synchronization information as being redundantly included in a second transmission packet that is next to the first transmission packet that originates the individual streamcipher-based synchronization information in question as a seed information for decrypting said second transmission packet.

2. A method for receiving and decrypting frame-based information from a transmission medium, with payload information of a particular frame being assigned to one or more transmission packets and having the payload information of such frame encrypted through a frame encryption key, and each transmission packet being provided with individual streamcipher-based synchronization information for in combination with the frame decryption key enabling said decrypting of an associated encrypted transmission packet,
said method being **characterized by** receiving said streamcipher-based synchronization information as being redundantly included in a second transmission packet that is next to the first transmission packet originating the individual streamcipher-based synchronization information in question as a seed information for decrypting said second transmission packet.

3. A method as claimed in Claim 2, wherein said decrypting of transmission packets is executed upon said receiving and before storage of the payload information for subsequent usage.

4. A method as claimed in Claim 2, wherein said transmission packets are without said decrypting stored upon said receiving, for subsequent executing said decrypting on the basis of said frame.

5. A device for transmitting frame-based information through a transmission medium, said device comprising assigning means for assigning payload information of a particular frame to one or more transmission packets, and encrypting means for encrypting the payload information of such frame through a frame encryption key, and having streamciphering means for providing each transmission packet with individual streamcipher-based synchronization information for in combination with the frame decryption key enabling decrypting of an associated encrypted transmission packet,
said device being **characterized by** having inserting means for inserting for transmission of said streamcipher-based synchronization information as being redundantly included in a second transmission packet that is next to the first transmission packet originating the individual streamcipher-based synchronization information in question as a seed information for decrypting said second transmission packet.

6. A device for receiving and decrypting frame-based information from a transmission medium, with payload information of a particular frame being assigned to one or more transmission packets and having the payload information of such frame encrypted through a frame encryption key, and having frame decrypting means for decrypting each transmission packet that is provided with individual streamcipher-based synchronization information associated to streamcipher decrypting means for in combination with the frame decryption key enabling said decrypting of an associated encrypted transmission packet,
said device being **characterized by** having selecting means for selecting said streamcipher-based synchronization information through its being redundantly included in a second transmission packet that is next to the first transmission packet originating the individual streamcipher-based synchronization information in question as a seed information for said decrypting means for decrypting said second transmission packet.

7. A system being arranged for encrypting multi-packet transmission frames according to a method as claimed in Claim 1, and for decrypting multi-packet transmission frames according to a method as claimed in Claim 2.

8. A tangible medium comprising information being encrypted according to a method as claimed in Claim 1, and/or arranged for being decrypted according to a method as claimed in Claim 2.

9. A transmittable signal being encrypted according to a method as claimed in Claim 1, and/or arranged for being decrypted according to a method as claimed in Claim 2.

10. A computer program product arranged for causing a processor to execute the method as claimed in Claim 1.

## Patentansprüche

1. Verfahren zum Übertragen framebasierter Information über ein Übertragungsmedium, während Nutzdateninformation (FP) eines bestimmten Frames (20) einem oder mehreren Übertragungspaketen (22) zugeordnet wird und die Nutzdateninformation eines derartigen Frames über einen Frameverschlüsselungsschlüssel (X) verschlüsselt wird, und wobei jedes Übertragungspaket (24) mit einzelnen stromverschlüsselungsbasierter Synchronisationsinformation (SCS2) versehen wird um in Kombination mit dem Frameentschlüsselungsschlüssel (K') eine Entschlüsselung eines assoziierten verschlüsselten Übertragungspakets (26) zu ermöglichen,
wobei das genannte Verfahren **gekennzeichnet ist durch** die Übertragung der genannten stromverschlüsselungsbasierten Synchronisationsinformation als redundant in ein zweites Übertragungspaket eingeschlossen, das dem ersten Übertragungspaket folgt, das die einzelne betreffende stromverschlüsselungsbasierte Synchronisationsinformation als Sameninformation zur Entschlüsselung des genannten zweiten Übertragungspakets erzeugt.

2. Verfahren zum Empfangen und Entschlüsseln framebasierter Information von einem Übertragungsmedium, wobei Nutzdateninformation eines bestimmten Frames einem oder mehreren Übertragungspaketen zugeordnet wird und wobei die Nutzdateninformation eines derartigen Frames über einen Frameverschlüsselungsschlüssel verschlüsselt wird, und wobei jedes Übertragungspaket mit einzelner stromverschlüsselungsbasierter Synchronisationsinformation versehen ist, um in Kombination mit dem Frameentschlüsselungsschlüssel die genannte Entschlüsselung eines assoziierten verschlüsselten Übertragungspakets zu ermöglichen,
wobei das genannte Verfahren **gekennzeichnet ist durch** den Empfang der genannten stromverschlüsselungsbasierten Synchronisationsinformation als redundant eingeschlossen in ein zweites Übertragungspaket, das dem ersten Übertragungspaket folgt, das die betreffende einzelne stromverschlüsselungsbasierte Synchronisationsinformation als Sameninformation zur Entschlüsselung des genannten zweiten Übertragungspakets erzeugt.

3. Verfahren nach Anspruch 2, wobei die genannte Entschlüsselung von Übertragungspaketen bei dem genannten Empfang und vor der Speicherung der Nutzdateninformation zur nachfolgender Verwendung durchgeführt wird.

4. Verfahren nach Anspruch 2, wobei die genannten Übertragungspakete ohne die genannte Entschlüsselung sind, die bei dem genannten Empfang gespeichert wird, zur nachfolgenden Durchführung der genannten Entschlüsselung auf Basis des genannten Frames.

5. Anordnung zur Übertragung framebasierter Information über ein Übertragungsmedium, wobei die genannte Anordnung Zuordnungsmittel aufweist zum Zuordnen von Nutzdateninformation eines bestimmten Frames zu einem oder mehreren Übertragungspaketen, und Verschlüsselungsmittel zum Verschlüsseln der Nutzdateninformation eines derartigen Frames über einen Frameverschlüsselungsschlüssel, und mit Stromverschlüsselungsmittel um jedes Übertragungspaket mit einzelner stromverschlüsselungsbasierter Synchronisationsinformation zu versehen um in Kombination mit dem Frameentschlüsselungsschlüssel die Entschlüsselung eines assoziierten verschlüsselten Übertragungspakets zu ermöglichen,
wobei die genannte Anordnung **gekennzeichnet ist durch** Einfügungsmittel zum Einfügen der Übertragung der genannten stromverschlüsselungsbasierten Synchronisationsinformation als redundant in ein zweites Übertragungspaket eingeschlossen, das dem ersten Übertragungspaket folgt, das die betreffende einzelne stromverschlüsselungsbasierte Synchronisationsinformation als Sameninformation zur Entschlüsselung des genannten zweiten Übertragungspakets erzeugt.

6. Anordnung zum Empfangen und Entschlüsseln framebasierter Information von einem Übertragungsmedium, mit Nutzdateninformation eines bestimmten Frames, das einem oder mehreren Übertragungspakete zugeordnet ist und wobei die Nutzdateninformation jedes Frames durch einen Frameverschlüsselungsschlüssel verschlüsselt ist, und mit Frameentschlüsselungsmitteln zum Entschlüsseln jedes Übertragungspakets, das mit einzelner stromverschlüsselungsbasierter Synchronisationsinformation versehen ist, die mit Stromverschlüsselungsentschlüsselungsmitteln assoziiert ist um in Kombination mit dem Frameentschlüsselungsschlüssel die genannte Entschlüsselung eines assoziierten verschlüsselten Übertragungspakets zu ermöglichen,
wobei die genannte Anordnung **gekennzeichnet ist durch** Selektionsmittel zum Selektieren der genannten stromverschlüsselungsbasierten Synchronisationsinformation **durch** die Tatsache, dass diese redundant in ein zweites Übertragungspaket eingeschlossen ist, das dem ersten Übertragungspaket folgt, das die betreffende einzelne stromverschlüsselungsbasierte Synchronisationsinformation als Sameninformation für die genannten Entschlüsselungsmittel zum Entschlüsseln des genannten zweiten Übertragungspakets verwendet wird.

7. System, vorgesehen zum Verschlüsseln von Mehrpaketübertragungsframes nach einem Verfahren nach Anspruch 1, und zum Entschlüsseln von Mehrpaketübertragungsframes nach einem Verfahren nach Anspruch 2.

8. Fühlbares Medium mit Information, die nach einem Verfahren nach Anspruch 1 verschlüsselt ist, und/oder vorgesehen um nach einem Verfahren nach Anspruch 2 entschlüsselt zu werden.

9. Übertragbares Signal, das nach einem Verfahren nach Anspruch 1 verschlüsselt ist, und/oder vorgesehen um nach einem Verfahren nach Anspruch 2 entschlüsselt zu werden.

10. Computerprogrammprodukt, vorgesehen um dafür zu sorgen, dass ein Prozessor das Verfahren nach Anspruch 1 durchführt.

## Revendications

1. Procédé pour transmettre des informations sur base de trames, par un média de transmission, tout en affectant les informations de charge utile (FP) d'une trame particulière (20) à un ou plusieurs paquets de transmission (22) et en chiffrant les informations de charge utile d'une telle trame, à l'aide d'une clé de chiffrement de trame (K), et en munissant chaque paquet de transmission (24) avec des informations individuelles de synchronisation, basées sur un chiffrage continu (SCC2), pour permettre, en combinaison avec la clé de déchiffrement (K'), de déchiffrer d'un paquet de transmission chiffré associé (26),
ledit procédé étant **caractérisé par** la transmission des informations de synchronisation, basées sur le chiffrage continu, comme étant inclut de manière redondante dans un second paquet de transmission suivant le premier paquet de transmission qui est à la source des informations individuelles de synchronisation, basées sur le chiffrage continu en question, comme informations de germe pour déchiffrer ledit second paquet de transmission.

2. Procédé pour recevoir et déchiffrer des informations basées sur une trame à partir d'un média de transmission, avec des informations de charge utile d'une trame particulière affectées à un ou plusieurs paquets de transmission et ayant les informations de charge utile d'une telle trame, chiffrée à l'aide une clé de chiffrement de trame, et chaque paquet de transmission étant fourni avec des informations individuelles de synchronisation, basées sur le chiffrage continu, pour permettre, en combinaison avec la clé de déchiffrement de trame, ledit déchiffrement d'un paquet de transmission chiffré associé,
ledit procédé étant **caractérisé par** la réception desdites informations de synchronisation, basées sur le chiffrage continu, comme étant incluses de manière redondante dans un second paquet de transmission suivant le premier paquet de transmission qui est à la source des informations individuelles de synchronisation, basées sur le chiffrage continu en question, comme informations de germe pour déchiffrer ledit second paquet de transmission.

3. Procédé selon la revendication 2, dans lequel ledit déchiffrement des paquets de transmission est exécuté dès ladite réception, et avant le stockage des informations de charge utile pour un usage ultérieur.

4. Procédé selon la revendication 2, dans lequel lesdits paquets de transmission sont stockés sans déchiffrement dès ladite réception, pour exécution ultérieure dudit déchiffrement sur base de ladite trame.

5. Dispositif pour transmettre des informations basées sur une trame, par un média de transmission, ledit dispositif comprenant des moyens d'affectation de la charge utile d'une trame particulière à un ou plusieurs paquets de transmission, et des moyens de chiffrement, pour chiffrer les informations de charge utile d'une telle trame à l'aide d'une clé de chiffrement de trame, et ayant des moyens de chiffrage continu pour munir chaque paquet de transmission avec des informations individuelles de synchronisation, basées sur du chiffrage continu, pour permettre, en combinaison avec la clé de déchiffrement de trame, de déchiffrer un paquet de transmission chiffré associé,
ledit dispositif étant **caractérisé par** la possession de moyens d'insertion pour insérer dans la transmission, lesdites informations de synchronisation, basées sur du chiffrage continu, comme étant incluses de manière redondante dans un second paquet de transmission suivant le premier paquet de transmission qui est à la source des informations individuelles de synchronisation, basées sur du chiffrage continu en question, comme informations de germe pour déchiffrer ledit second paquet de transmission.

6. Dispositif pour recevoir et déchiffrer des informations basées sur une trame à partir d'un média de transmission, avec des informations de charge utile d'une trame particulière affectées à un ou plusieurs paquets de transmission, et ayant des informations de charge utile d'une telle trame chiffrée à l'aide d'une clé de chiffrement de trame, et ayant des moyens de déchiffrement pour déchiffrer chaque paquet de transmission muni avec des informations individuelles de synchronisation, basées sur du chiffrage continu, pour permettre, en combinaison avec la clé de déchiffrement de trame, ledit déchiffrement d'un paquet de transmission chiffré et associé,
ledit dispositif étant **caractérisé par** la possession de moyens de sélection pour sélectionner lesdites informations de synchronisation, basées sur du chiffrage continu comme ayant été incluses de manière redondante dans un second paquet de transmission suivant le premier paquet de transmission qui est à la source des informations individuelles de synchronisation, basées sur du chiffrage continu en question, comme informations de germe pour lesdits moyens de déchiffrement afin de déchiffrer ledit second paquet de transmission.

7. Système étant agencé pour chiffrer des trames de transmission à multiples paquets suivant un procédé selon la revendication 1, et pour déchiffrer les trames à multiples paquets suivant un procédé selon la revendication 2.

8. Média tangible comprenant des informations chiffrées suivant un procédé selon la revendication 1, et/ou agencé pour être déchiffré suivant un procédé selon la revendication 2.

9. Signal pouvant être transmis étant chiffré, suivant un procédé selon la revendication 1, et/ou agencé pour être déchiffré suivant un procédé selon la revendication 2.

10. Logiciel agencé pour l'exécution par un processeur, du procédé selon la revendication 1.
